# FASCICULE DE BREVET EUROPEEN

(11) **EP 0 803 286 B1**
(45) Date de publication et mention de la délivrance du brevet: **28.02.2001**
(21) Numéro de dépôt: 97400904.5
(22) Date de dépôt: 22.04.1997
(51) Int. Cl.: B01J 8/00, B01J 8/06

(54) **Procédé et dispositif pour le chargement homogène de particules d'un catalyseur solide dans un réacteur tubulaire**
Verfahren und Vorrichtung zur homogenen Beschickung von festen Katalysatorteilchen in einen Rohrreaktor
Method and device for the homogeneous charging of solid catalyst particles into a tubular reactor

(30) Priorité: 26.04.1996 FR 9605306
(43) Date de publication de la demande: 29.10.1997
(73) Titulaire: TOTAL RAFFINAGE DISTRIBUTION S.A., 92800 Puteaux (FR)
(72) Inventeur: Haquet, Yvon, 76430 Saint Romain De Colbosc (FR); Tref, Jean-Pierre, 76620 Le Havre (FR)
(74) Mandataire: Jolly, Jean-Pierre

(56) Documents cités:
- EP-A- 0 656 228
- GB-A- 2 287 016
- US-A- 3 788 370

## Description

La présente invention concerne un procédé et un dispositif pour le chargement homogène de particules d'un catalyseur solide dans un réacteur tubulaire. L'invention concerne également un dispositif pour la mise en oeuvre de ce procédé.

On sait que les réacteurs chimiques tubulaires sont essentiellement constitués de quelques centaines à plusieurs milliers de tubes disposés verticalement.

Le chargement de ces tubes en particules de catalyseur solide est d'une grande importance, car, de l'homogénéité et de l'uniformité du chargement des différents tubes, dépendent de façon étroite les conditions et les résultats de la réaction qui sera conduite dans ce réacteur en présence du catalyseur (par exemple, fabrication d'oxyde d'éthylène, d'aniline, etc...).

Pendant le chargement, des vides peuvent se former entre les grains de catalyseur à l'intérieur des tubes, provoquant ainsi, pendant la réaction à tendance exothermique, la création de points chauds sur lesdits tubes, préjudiciables à la métallurgie de ces tubes. De plus, la charge du réacteur peut passer préférentiellement par des tubes mal remplis, ayant pour conséquence un dysfonctionnement du réacteur, donc un mauvais rendement de l'unité industrielle.

Pour résumer, on peut dire qu'un mauvais remplissage des tubes se traduit par une réduction de la durée d'utilisation du réacteur et par des interventions plus fréquentes de maintenance, entraînant des arrêts du cycle de production.

Pour obtenir un remplissage homogène des tubes, il a donc été proposé d'effectuer le chargement du catalyseur tube par tube (voir EP-A-041 144), en disposant éventuellement des accessoires dans les tubes pour faciliter la répartition des grains de catalyseur dans ceux-ci (voir par exemple EP-A-548 999 ou US-A-3 608 751).

On a aussi proposé d'effectuer le chargement du réacteur par séries de tubes (par exemple, de 10 à 20 tubes), comme décrit dans US-A-3 913 806 ou JP-A-59/139 923.

Enfin, pour accélérer le chargement des grains de catalyseur, il a également été proposé de soumettre à des vibrations les capacités d'alimentation, comme décrit dans FR-A-2 691 954 ou GB-A-1 267 086.

Ces procédés présentent toutefois l'inconvénient de nécessiter des durées de chargement extrêmement longues, d'utiliser des machines de remplissage complexes et encombrantes, d'exiger la présence de plusieurs opérateurs et de conduire malgré tout à des différences appréciables des densités de chargement entre les tubes d'un même réacteur.

La présente invention vise à remédier à ces inconvénients de la technique antérieure en ayant recours aux procédés et aux dispositifs connus de chargement homogène dits de "chargement dense", déjà utilisés dans les réacteurs chimiques à lit de catalyseur. Ces techniques sont décrites, par exemple, dans les publications suivantes: EP-A-007 854, EP-A-116 246, ou demande de brevet français N° 95 12334, du 20 octobre 1995.

On sait que ces techniques dites de chargement dense font appel à une distribution sensiblement régulière des particules de catalyseur par effet de pluie, ces particules étant déversées dans la partie supérieure du réacteur, à l'aplomb d'un équipage généralement mobile et entraîné en rotation (comprenant par exemple des secteurs circulaires ou des lanières souples), permettant ainsi une répartition sensiblement homogène à l'intérieur du réacteur.

Au cours de différents travaux, qui ont consisté à appliquer ces techniques de distribution homogène d'un solide sous forme divisée au chargement de réacteurs tubulaires, on a constaté que les tubes localisés le plus à l'extérieur de la plaque tubulaire, sont remplis plus rapidement que ceux disposés dans la partie centrale du réacteur (par plaque tubulaire du réacteur, on entend la plaque métallique reliant les différents tubes dans leur partie supérieure et disposée sensiblement perpendiculaire à ces dits tubes). Il s'ensuit que, si l'on poursuit le chargement, l'accumulation des grains va s'accentuer au niveau des tubes remplis localisés les plus à l'extérieur de la plaque tubulaire, cette accumulation de grains provoquant, par débordement, un chargement non dense des tubes en cours de remplissage et situés plus au centre de la dite plaque tubulaire.

En plus, on sait que, si les grains de catalyseur sont fragiles, on rencontre parfois des risques d'attrition de ces grains, lorsqu'ils tombent sur la plaque tubulaire du réacteur.

L'invention vise, par conséquent, à adapter aux réacteurs tubulaires les techniques de chargement homogène des réacteurs chimiques de l'art antérieur, en éliminant les inconvénients qui viennent d'être mentionnés.

A cet effet, l'invention a pour objet un procédé de chargement homogène de particules d'un catalyseur solide dans un réacteur tubulaire, du type comprenant une pluralité de tubes verticaux débouchant à leur partie supérieure à la surface d'une plaque tubulaire, qui les réunit et leur est sensiblement perpendiculaire, à l'aide d'un système de chargement assurant une pluie homogène de particules sur toute la surface de ladite plaque,
ce procédé étant caractérisé en ce que :
- on dispose sur le pourtour et à l'aplomb de la plaque tubulaire une première paroi cylindrique de diamètre sensiblement identique à celui de ladite plaque, de façon à ce que tous les orifices de chargement des tubes soient situés à l'intérieur de l'enceinte cylindrique ainsi réalisée,
- on procède au chargement homogène des particules à l'intérieur de la paroi cylindrique,
- on interrompt le dit chargement homogène lorsque les tubes disposés à la périphérie de la plaque tubulaire et au voisinage de la paroi cylindrique sont remplis,
- on dispose sur la plaque tubulaire une seconde paroi cylindrique de diamètre inférieur à celui de la précédente, le diamètre de cette seconde paroi étant tel que les tubes déjà remplis soient localisés à l'extérieur de celle-ci, tandis que les tubes non complètement remplis sont localisés à l'intérieur de cette seconde paroi,
- on reprend la distribution homogène des particules jusqu'à ce que les tubes situés au plus près de la paroi cylindrique soient à leur tour remplis,
- et l'on poursuit le cycle de remplissage, en remplaçant à chaque fois la paroi cylindrique utilisée par une paroi cylindrique de diamètre inférieur séparant les orifices de remplissage des tubes remplis de ceux qui ne le sont pas.

Pour la mise en oeuvre de ce procédé, on pourra utiliser successivement des parois cylindriques présentant des diamètres de plus en plus petits ou, de préférence, une même paroi cylindrique possédant un diamètre réglable, pour pouvoir réduire ce diamètre après chaque phase de remplissage.

Au cours de ses travaux, la Demanderesse a établi que le débit de déversement du catalyseur dans le réacteur doit être relativement faible et compris, de préférence, entre 0,5 t/h et 4 t/h par m² de section de tube alimenté.

Pour obtenir une répartition homogène des particules de catalyseur dans chacun des tubes du réacteur, le catalyseur est de préférence distribué par effet de pluie, par l'intermédiaire d'un équipage mobile localisé dans la partie supérieure du réacteur et entraîné en rotation autour d'un axe vertical par un moyen moteur, ce procédé et ce dispositif étant dénommés commercialement "DENSICAT" et décrits dans la demande de brevet français de la Demanderesse, N° 95 12334, du 20 octobre 1995, ou dans les demandes de brevet européen EP-A-007 854 et EP-A-116 246.

L'invention a également pour objet un dispositif pour le chargement homogène de particules d'un catalyseur solide dans un réacteur tubulaire, du type comprenant une pluralité de tubes verticaux débouchant, à leur partie supérieure, à la surface d'une plaque tubulaire, qui les réunit et leur est sensiblement perpendiculaire, ce dispositif comportant, au dessus de la plaque tubulaire, un système de distribution homogène des particules de catalyseur et étant caractérisé en ce qu'il comprend :
- une paroi cylindrique apte à prendre appui sur le pourtour et à l'aplomb de la plaque tubulaire,
- des parois cylindriques de diamètres inférieurs aptes à prendre appui successivement sur la plaque tubulaire, pour y séparer les tubes complètement remplis de catalyseur des tubes non entièrement remplis.

L'invention a aussi pour objet une variante d'un tel dispositif dans lequel les parois cylindriques de diamètres différents sont remplacées, de préférence, par une unique paroi cylindrique à diamètre variable et ajustable.

La ou les parois cylindriques de ces dispositifs peuvent naturellement avoir toute hauteur désirée, par exemple entre 20 et 150 cm et, de préférence, voisine de 150 cm.

On pourra également utiliser une paroi cylindrique de diamètre réglable comportant, de préférence, des secteurs cylindriques se recouvrant latéralement et maintenus extérieurement par au moins une ceinture extérieure ajustable.

D'autres systèmes peuvent également être utilisés pour réduire l'espace de chargement comme, par exemple, des rideaux coulissants sur des axes de l'extérieur vers le centre du réacteur, des panneaux réglables en position sur la plaque tubulaire, des éléments gonflables ou des bâches en forme de cône, avec au moins un diamètre réglable.

Les essais effectués par la Demanderesse ont montré que le procédé et le dispositif conformes à la présente invention, présentent de sérieux avantages par rapport à ceux de la technique antérieure:
- d'une part, on obtient une homogénéité de chargement des différents tubes très supérieure à celle résultant des procédés connus, puisque la différence de perte de charge moyenne mesurée sur l'ensemble des tubes n'est au plus que de 1 à 3% ;
- d'autre part, la durée de chargement est considérablement réduite, puisque, pour charger un réacteur comprenant plus de 11000 tubes d'un diamètre de 1 pouce (2,54 cm) et d'une longueur de 3 mètres, par exemple, avec des particules d'une granulométrie maximum de 6 mm, il faut compter moins de 20 heures avec le procédé conforme à l'invention, contre plus de 40 heures, avec les procédés de l'art antérieur;
- enfin, la densité de chargement est accrue de façon sensible, d'environ 2 à 8%, par rapport à la technique antérieure.

Un autre avantage de la présente invention est lié au gain de temps réalisé sur le contrôle des pertes de charge dans les tubes remplis pendant le chargement en cours des autres tubes, ce qui représente un gain de temps au niveau de l'immobilisation du réacteur, donc de l'unité industrielle.

On notera également qu'avec le procédé et le dispositif conformes à l'invention, le nombre d'intervenants est réduit sensiblement de moitié par rapport à un chargement utilisant les techniques de l'art antérieur (par exemple, avec vibrations).

On sait que, si le catalyseur est fragile, le procédé et le dispositif conformes à l'invention peuvent parfois conduire à la formation de fines, par suite du choc des particules contre les parties pleines de la face supérieure de la plaque tubulaire du réacteur. La Demanderesse a toutefois établi qu'il est possible d'éliminer pratiquement de tels bris de particules et les formations de fines qui en résultent, en garnissant la surface externe de la plaque tubulaire d'un revêtement en un matériau amortissant les chocs, de préférence un matériau du type tissu, carton, plaque d'élastomère ou moquette, dans lequel des orifices de diamètre identique sont ménagés en regard des extrémités correspondantes des tubes. De plus, le revêtement de type moquette présente l'avantage d'agir comme un piège vis-à-vis des poussières qui se trouvent pratiquement toujours à la surface des particules de catalyseur.

Les dessins schématiques annexés qui n'ont pas de caractère limitatif, illustrent des formes de mise en oeuvre de l'invention. Sur ces dessins:
Les figures 1 et 2 sont deux coupes verticales d'un réacteur tubulaire, équipé d'un dispositif de remplissage conforme à l'invention, dans deux phases successives de remplissage;
La figure 3 est une vue de principe, en perspective avec arrachés, illustrant une forme de mise en oeuvre du procédé de remplissage conforme à l'invention;
La figure 4 est une vue en perspective d'une enceinte cylindrique à diamètre réglable, apte à être utilisée dans le cadre de la présente invention.

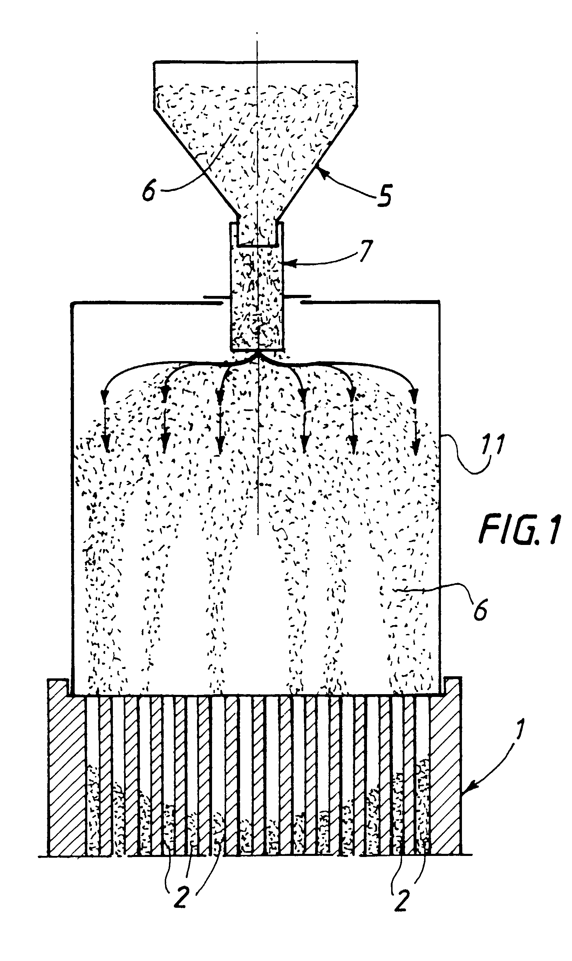

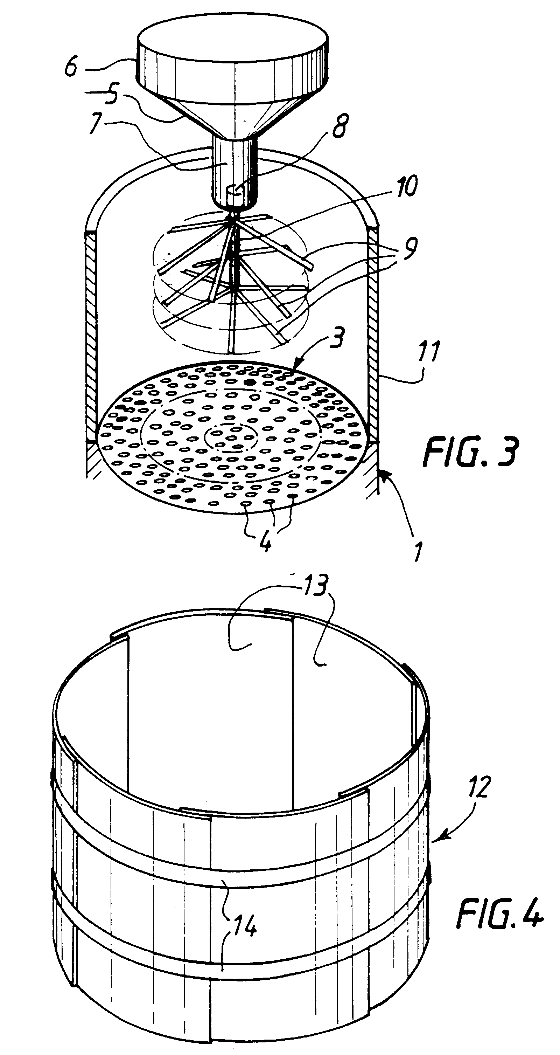

On se référera d'abord aux figures 1 à 3, qui représentent un réacteur tubulaire 1, comprenant une pluralité de tubes verticaux contigus 2, débouchant à leur extrémité supérieure à travers une plaque plane 3 (voir figure 3), percée d'orifices 4, disposés sensiblement suivant des couronnes cylindriques.

A l'aplomb du réacteur 1 est disposé un dispositif de remplissage à distribution sous forme de pluie. Ce dispositif de chargement dense est de préférence du type rappelé ci-dessus et breveté par la Demanderesse, et il comprend une trémie 5, alimentant en particules de catalyseur 6 un réservoir 7.

Au-dessous du réservoir 7 est disposé un équipage mobile, constitué, sur la figure 3, de lanières souples 9, disposées suivant trois niveaux différents. Les lumières 9 sont entraînées en rotation par un moteur 8, entraînant un axe 10, sur lequel elles sont articulées de manière à pouvoir se soulever sous l'effet de la force centrifuge. Comme décrit dans les brevets mentionnés ci-dessus, les particules 6 de catalyseur, en tombant sur les lanières 9, sont déviées par celles-ci, puis se déversent en direction de la plaque 3.

Ainsi qu'il a été expliqué ci-dessus, les particules 6 déviées latéralement ont tendance à remplir plus rapidement les tubes 2 disposés à la périphérie du réacteur. Dans ces tubes, on obtient un chargement dense et homogène, mais, lorsqu'ils sont pleins, les particules qui s'accumulent à leur sommet se déversent latéralement dans les tubes contigus, dans lesquels, à un chargement initialement dense, succède un chargement ordinaire. Il en résulte un chargement non uniforme pour les différents tubes du réacteur et c'est ce problème sérieux que se propose de résoudre l'invention.

A cet effet, comme on le voit sur la figure 1, avant le remplissage, on installe sur la plaque supérieure 3 du réacteur, à la périphérie de celui-ci, une paroi cylindrique verticale 11, éventuellement fermée à sa partie supérieure, avec l'équipage mobile disposé dans la partie supérieure du réacteur.

On procède alors à une première phase de chargement, que l'on arrête quand les tubes 2 disposés à la périphérie du réacteur sont remplis. Le chargement ainsi réalisé dans ces tubes est un chargement homogène et dense, de même que dans les autres tubes qui ne sont que partiellement remplis.

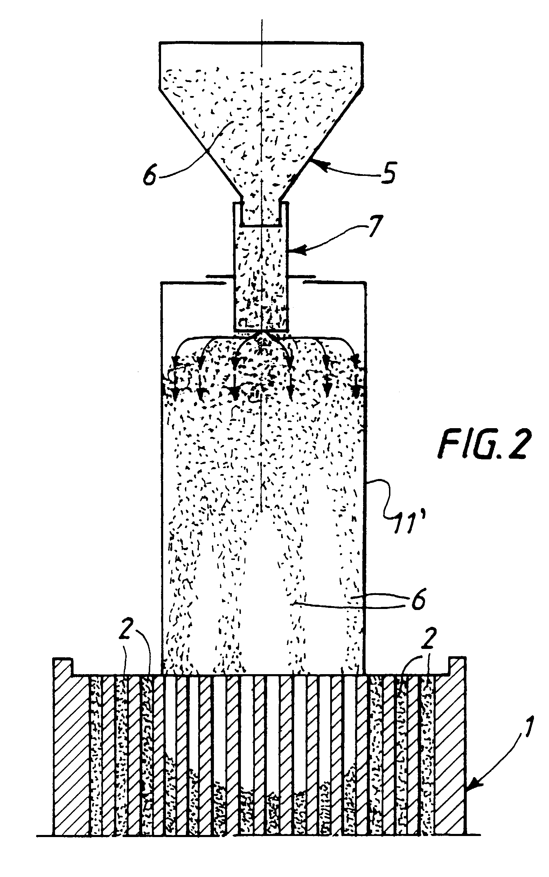

On retire alors la paroi cylindrique 11 et on la remplace par une paroi 11' (figure 2), de diamètre plus petit, dont la base sépare des autres tubes les tubes périphériques déjà remplis.

On reprend alors le remplissage de manière à remplir les tubes 2 disposés au voisinage de la paroi 11' et, quand ils sont pleins, on interrompt le chargement et l'on remplace la paroi 11' par une nouvelle paroi de diamètre inférieur, en renouvelant le processus autant de fois qu'il le faut jusqu'à ce que tous les tubes soient remplis.

On obtient ainsi, pour la totalité des tubes, un chargement dense d'une densité supérieure de 2 à 8% au chargement obtenu par les systèmes de la technique antérieure, où les tubes sont remplis un par un ou par séries de tubes. On constate, en outre, une excellente homogénéité de chargement, avec une perte de charge moyenne calculée sur l'ensemble des tubes, ne dépassant pas 3%.

Pour éviter les bris éventuels de particules de catalyseur heurtant ladite plaque tubulaire 3, la surface de cette plaque tubulaire sera avantageusement recouverte d'une garniture en un matériau apte à amortir les chocs des particules, en ménageant dans cette garniture des ouvertures de diamètre sensiblement équivalent en regard des orifices des tubes 2 du réacteur. Un même matériau d'amortissement pourra avantageusement recouvrir la surface interne des parois cylindriques, au moins à leur partie inférieure. Ce matériau sera par exemple du type tissu, carton, plaque d'élastomère ou, de préférence, du type moquette, cette moquette présentant l'avantage de retenir les poussières des particules, presque toujours présentes à la surface des grains de catalyseur.

Ainsi qu'il a été indiqué ci-dessus, au lieu d'utiliser des parois cylindriques distinctes 11, 11', etc..., dans les différentes phases de chargement, on peut aussi avoir recours à une unique paroi de diamètre réglable.

A titre d'exemple, une telle paroi 12 est représentée sur la figure 4. Elle est constituée d'une pluralité de secteurs de cylindres concentriques 13 se recouvrant latéralement mutuellement de façon réglable, et tenus en position par des systèmes de fixation 14 dont la longueur est également réglable.

L'invention apporte donc un moyen simple et facile à mettre en oeuvre pour effectuer un chargement dense, rapide et homogène, des divers tubes d'un réacteur tubulaire.

L'exemple comparatif décrit ci-après illustre également les avantages de l'invention.

### Exemple

On effectue deux remplissages successifs d'un même réacteur chimique constitué de 11858 tubes sensiblement verticaux, chacun de ces tubes ayant un diamètre de 24,8 mm et une longueur de 2900 mm, avec un catalyseur dont les grains sont en forme de bille, le diamètre de ces grains variant de 3 à 6 mm.

Le premier remplissage est réalisé avec le procédé et le dispositif conforme à l'invention, l'équipage mobile de ce dispositif étant constitué de lanières souples, disposées suivant trois niveaux différents et entraînées par un moyen moteur. Cet équipage mobile est conforme au dispositif décrit dans la demande de brevet français N°95-12334 du 20 octobre 1995.

Le second remplissage est conforme à l'art antérieur, c'est à dire un chargement par séries de tubes, avec trémie d'alimentation vibrante.

Les résultats obtenus sont rassemblés dans le tableau 1 ci-après:

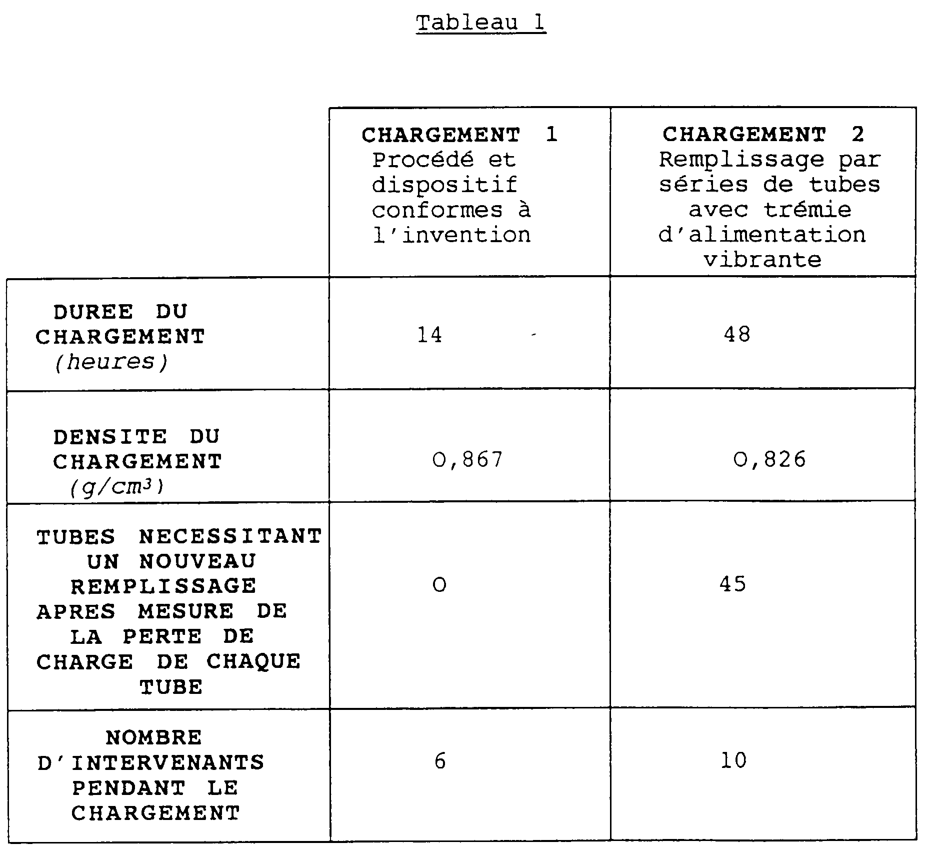

Gn voit que le chargement réalisé avec le procédé et le dispositif conformes à la présente invention est particulièrement avantageux par rapport à une technique de chargement décrite dans l'art antérieur et, tout en réduisant la durée de chargement d'environ 70%, on obtient, en plus, un gain en densité de chargement du réacteur d'environ 5% et une parfaite uniformité du chargement des tubes, puisque aucun de ceux-ci n'ont dû être déchargés pour procéder à un nouveau remplissage. De plus, le nombre d'intervenants est sensiblement réduit de moitié.

## Revendications

1. Procédé de chargement homogène de particules d'un catalyseur solide (6) dans un réacteur tubulaire, du type comprenant une pluralité de tubes verticaux (2) débouchant à leur partie supérieure à la surface d'une plaque tubulaire (3), qui les réunit et leur est sensiblement perpendiculaire, à l'aide d'un système de chargement assurant une pluie homogène de particules sur toute la surface de ladite plaque,
ce procédé étant caractérisé en ce que :
- on dispose sur le pourtour et à l'aplomb de la plaque tubulaire (3) une première paroi cylindrique (11) de diamètre sensiblement identique à celui de cette dite plaque, de façon à ce que tous les orifices de chargement des tubes (4) soient situés à l'intérieur de l'enceinte cylindrique ainsi réalisée,
- on procède au chargement homogène des particules à l'intérieur de la paroi cylindrique,
- on interrompt le dit chargement homogène lorsque les tubes (2) disposés à la périphérie de la plaque tubulaire (3) et au voisinage de la paroi cylindrique (11) sont remplis,
- on dispose sur la plaque tubulaire une seconde paroi cylindrique (11') de diamètre inférieur à celui de la précédente, le diamètre de cette seconde paroi étant tel que les tubes déjà remplis (2) soient localisés à l'extérieur de celle-ci, tandis que les tubes non complètement remplis sont localisés à l'intérieur de cette seconde paroi,
- on reprend la distribution homogène des particules jusqu'à ce que les tubes (2) situés au plus près de la paroi cylindrique soient à leur tour remplis,
- et l'on poursuit le cycle de remplissage, en remplaçant à chaque fois la paroi cylindrique utilisée par une paroi cylindrique de diamètre inférieur séparant les orifices de remplissage (4) des tubes remplis de ceux qui ne le sont pas.

2. Procédé selon la revendication 1, caractérisé en ce que la paroi cylindrique (11) possède un diamètre réglable, qui est réduit après chaque phase de remplissage.

3. Procédé selon l'une des revendications 1 ou 2, caractérisé en ce que le débit de déversement du catalyseur est compris entre 0,5 t/h et 4 t/h par m² de section (4) de tube alimenté.

4. Procédé selon l'une des revendications 1 à 3, caractérisé en ce que le chargement homogène des grains de catalyseur est du type à effet de pluie.

5. Procédé selon l'une des revendications 1 à 4, caractérisé en ce que le moyen de distribution des particules de catalyseur (9) comprend un équipage mobile entraîné en rotation autour d'un axe vertical (10) par un moyen moteur (7).

6. Procédé selon l'une des revendications 1 à 5, caractérisé en ce que la plaque tubulaire réunissant les tubes est recouverte d'un matériau apte à amortir les chocs des particules.

7. Dispositif pour le chargement homogène de particules d'un catalyseur solide (6) dans un réacteur tubulaire, du type comprenant une pluralité de tubes verticaux (2) débouchant, à leur partie supérieure (4), à la surface d'une plaque tubulaire (3), qui les réunit et leur est sensiblement perpendiculaire, ce dispositif comportant, au-dessus de la plaque tubulaire (3), un système de distribution homogène des particules de catalyseur et étant caractérisé en ce qu'il comprend :
- une paroi cylindrique (11) apte à prendre appui sur le pourtour et à l'aplomb de la plaque tubulaire (3),
- des parois cylindriques de diamètres inférieurs (11') aptes à prendre appui successivement sur la plaque tubulaire (3), pour y séparer les tubes (2) complètement remplis de catalyseur des tubes non entièrement remplis.

8. Dispositif selon la revendication 7, caractérisé en ce qu'il comprend une paroi cylindrique de diamètre variable et ajustable (12).

9. Dispositif selon l'une des revendications 7 et 8, caractérisé en ce que la paroi cylindrique de diamètre réglable comporte des secteurs cylindriques (12) se recouvrant latéralement.

10. Dispositif selon la revendication 9, caractérisé en ce que les secteurs cylindriques (13) sont maintenus extérieurement par au moins une ceinture extérieure ajustable (14).

11. Dispositif selon l'une des revendications 7 à 10, caractérisé en ce que les systèmes utilisés pour réduire l'espace de chargement sont du type rideaux coulissants sur des axes de l'extérieur vers le centre du réacteur, des panneaux réglables en position sur la plaque tubulaire, des éléments gonflables ou des bâches en forme de cône, avec au moins un diamètre réglable.

12. Dispositif selon l'une des revendications 7 à 11, caractérisé en ce que la surface externe de la plaque tubulaire du réacteur (3) est garnie d'un revêtement en un matériau apte à amortir le choc des particules de catalyseur, des orifices de diamètre correspondant étant ménagés dans ce revêtement en regard des extrémités (4) correspondantes des tubes du réacteur.

13. Dispositif selon l'une des revendications 7 à 12, caractérisé en ce que la base de la ou des parois cylindriques (11,11') est gainée, de préférence sur sa face interne, d'un matériau apte à amortir le choc des particules de catalyseur.

14. Dispositif selon l'une des revendications 12 et 13, caractérisé en ce que le matériau apte à amortir les chocs des particules sur la plaque tubulaire (3) et sur la face interne des parois cylindriques est du type tissu, carton, plaque d'élastomère ou moquette.

## Patentansprüche

1. Verfahren zur homogenen Beschickung eines Rohrreaktors mit festen Katalysatorteilchen (6), welcher eine Vielzahl von vertikalen Rohren (2) aufweist, die in ihrem oberen Abschnitt an der Oberfläche einer Rohrplatte (3) münden, welche diese miteinander verbindet und im wesentlichen senkrecht zu diesen steht, mit Hilfe einer Beschickungsanlage, welche einen homogenen Sprühregen aus Teilchen über die gesamte Oberfläche der Platte gewährleistet,
**dadurch gekennzeichnet,**
- dass auf dem äußeren Umfang und senkrecht auf der Rohrplatte (3) eine erste zylindrische Wandung (11) angeordnet wird, deren Durchmesser im wesentlichen gleich dem Durchmesser dieser Platte ist, so dass sich alle Beschickungsöffnungen der Rohre (4) im Inneren des auf diese Weise gebildeten umschlossenen Raumes befinden,
- dass innerhalb der zylindrischen Wandung die homogene Beschickung mit Teilchen vorgenommen wird,
- dass die homogene Beschickung unterbrochen wird, wenn die auf dem Umfang der Rohrplatte (3) und in der Nähe der zylindrischen Wandung (11) angeordneten Rohre (2) gefüllt sind,
- dass auf der Rohrplatte eine zweite zylindrische Wandung (11') angeordnet wird, deren Durchmesser kleiner ist als der Durchmesser der vorigen Platte, wobei der Durchmesser dieser zweiten Wandung so gehalten wird, dass die schon vollständig gefüllten Rohre (2) sich außerhalb derselben befinden, wohingegen sich die noch nicht vollständig gefüllten Rohre innerhalb dieser zweiten Wandung befinden,
- dass die homogene Verteilung der Teilchen wieder aufgenommen wird, bis die sich die der zylindrischen Wandung am nächsten befindenden Rohre (2) ihrerseits gefüllt sind,
- und dass der Füllzyklus weitergeführt wird, indem jedes Mal die verwendete zylindrische Wandung durch eine zylindrische Wandung ersetzt wird, deren Durchmesser kleiner ist und welche die Füllöffnungen (4) der gefüllten Rohre von denen der nicht gefüllten trennt.

2. Verfahren nach Anspruch 1, dadurch gekennzeichnet, dass die zylindrische Wandung (11) einen einstellbaren Durchmesser besitzt, der nach jeder Füllphase verkleinert wird.

3. Verfahren nach einem der Ansprüche 1 oder 2, dadurch gekennzeichnet, dass die Durchlaufleistung beim Einschütten des Katalysatormaterials zwischen 0,5 t/h und 4 t/h pro m² des Querschnitts (4) des damit gefüllten Rohres beträgt.

4. Verfahren nach einem der Ansprüche 1 bis 3, dadurch gekennzeichnet, dass die homogene Beschickung mit körnigem Katalysatormaterial in der Weise erfolgt, dass eine Sprühregenwirkung erzielt wird.

5. Verfahren nach einem der Ansprüche 1 bis 4, dadurch gekennzeichnet, dass die Einrichtung zum Verteilen der Katalysatorteilchen (9) eine bewegliche Ausrüstung aufweist, die mittels einer Antriebseinrichtung (7) in Drehung um eine vertikale Achse (10) versetzt wird.

6. Verfahren nach einem der Ansprüche 1 bis 5, dadurch gekennzeichnet, dass die Rohrplatte, welche die Rohre miteinander verbindet, mit einem Werkstoff überzogen ist, der zur Dämpfung der Stöße der Teilchen geeignet ist.

7. Vorrichtung zur homogenen Beschickung eines Rohrreaktors mit festen Katalysatorteilchen (6), welcher eine Vielzahl von vertikalen Rohren (2) aufweist, die in ihrem oberen Abschnitt an der Oberfläche einer Rohrplatte (3) münden, welche diese miteinander verbindet und im wesentlichen senkrecht zu diesen steht, wobei diese Vorrichtung oberhalb der Rohrplatte (3) eine Anlage zur homogenen Verteilung der Katalysatorteilchen aufweist,
**dadurch gekennzeichnet,** dass sie folgendes aufweist:
- eine zylindrische Wandung (11), welche auf dem äußeren Umfang und senkrecht auf der Rohrplatte (3) abstützbar ist,
- zylindrische Wandungen (11') von kleinerem Durchmesser, die nacheinander auf der Rohrplatte (3) abstützbar sind und dabei die schon vollständig mit Katalysatormaterial gefüllten Rohre (2) von den noch nicht vollständig gefüllten Rohren trennen.

8. Verfahren nach Anspruch 7, dadurch gekennzeichnet, dass sie eine zylindrische Wandung mit veränderlichem und einstellbarem Durchmesser (12) aufweist.

9. Vorrichtung nach einem der Ansprüche 7 und 8, dadurch gekennzeichnet, dass die zylindrische Wandung mit einstellbarem Durchmesser zylindrische Abschnitte (12) aufweist, die sich seitlich überdecken.

10. Vorrichtung nach Anspruch 9, dadurch gekennzeichnet, dass die zylindrischen Abschnitte (13) außen mittels mindestens einer einstellbaren äußeren Umschließung gehalten sind.

11. Vorrichtung nach einem der Ansprüche 7 bis 11, dadurch gekennzeichnet. dass die zum Verkleinern des Beschickungsraumes verwendeten Einrichtungen in der Art von Vorhängen, welche auf Achsen zur Verschiebung von außen zur Mitte des Reaktors hin angeordnet sind, in der Art von Platten, die in ihrer Position auf der Rohrplatte einstellbar sind, in der Art aufblasbarer Elemente oder kegelförmigen Behältern mit zumindest einem einstellbaren Durchmesser ausgebildet sind.

12. Vorrichtung nach einem der Ansprüche 7 bis 11, dadurch gekennzeichnet, dass die Außenfläche der Rohrplatte des Reaktors (3) mit einem Überzug aus einem Werkstoff versehen ist, der zur Dämpfung der Stöße der Katalysatorteilchen geeignet ist, wobei Öffnungen von entsprechendem Durchmesser in diesem Überzug gegenüber den entsprechenden Enden (4) der Reaktorrohre ausgebildet sind.

13. Vorrichtung nach einem der Ansprüche 7 bis 12, dadurch gekennzeichnet, dass die Basis der zylindrischen Wandung bzw. Wandungen (11, 11') mit einer Ummantelung. vorzugsweise auf ihrer Innenfläche, aus einem Werkstoff versehen ist, der zur Dämpfung der Stöße der Katalysatorteilchen geeignet ist.

14. Vorrichtung nach einem der Ansprüche 12 und 13, dadurch gekennzeichnet, dass der zur Dämpfung der Stöße der Teilchen auf der Rohrplatte (3) und auf der Innenfläche der zylindrischen Wandungen geeignete Werkstoff von der Art eines Gewebes, einer Pappe, einer Platte aus Elastomermaterial oder eines Vliesbelags ist.

## Claims

1. A method for the homogeneous charging of particles of a solid catalyst (6) into a tubular reactor, of the type comprising a plurality of vertical tubes (2) opening at their upper portion on the surface of a tubular plate (3) which joins them and which is substantially perpendicular to them, by means of a charging system ensuring a homogeneous rain of particles over the entire surface of said plate, said method being characterised in that:
- a first cylindrical wall (11) is placed around the periphery of and perpendicular to the tubular plate (3), which cylindrical wall is of a diameter substantially identical to that of said plate so that all the charging orifices of the tubes (4) are disposed inside the cylindrical enclosure thus formed,
- the homogeneous charging of the particles inside the cylindrical wall is carried out,
- said homogeneous charging is interrupted when the tubes (2) disposed on the periphery of the tubular plate (3) and in the vicinity of the cylindrical wall (11) are filled,
- a second cylindrical wall (11') is disposed on the tubular plate, which is of a smaller diameter than that of the preceding one, the diameter of this second wall being such that the already filled tubes (2) are situated externally thereof, whereas the not completely filled tubes are situated internally of this second wall,
- the homogeneous distribution of the particles is resumed until the tubes (2) situated nearest the cylindrical wall are, in turn, filled,
- and the filling cycle is continued, each time by replacing the cylindrical wall used with a cylindrical wall of smaller diameter separating the filling orifices (4) of the filled tubes from those which are not filled.

2. A method according to claim 1, characterised in that the cylindrical wall (11) is of adjustable diameter which is reduced after filling stage.

3. A method according to any one of claims 1 or 2, characterised in that the pouring rate of the catalyst is between 0.5 t/h and 4 t/h per m² of section (4) of charged tube.

4. A method according to any one of claims 1 to 3, characterised in that the homogeneous charging of the catalyst particles is of the rain-effect type.

5. A method according to any one of claims 1 to 4, characterised in that the means (9) for distributing the catalyst particles comprises a movable apparatus caused to rotate about vertical shaft (10) by a drive means (7) [sic].

6. A method according to any one of claims 1 to 5, characterised in that the tubular plate joining the tubes is covered with a material adapted to absorb the shocks of the particles.

7. A device for the homogeneous charging of particles of a solid catalyst (6) into a tubular reactor, of the type comprising a plurality of vertical tubes (2) opening, at their upper portion (4), on the surface of a tubular plate (3) which joins them and which is substantially perpendicular to them, this device comprising, above the tubular plate (3), a system for the homogeneous distribution of the catalyst particles and being characterised in that it comprises:
- a cylindrical wall (11) adapted to bear on the periphery of and perpendicularly to the tubular plate (3),
- cylindrical walls of smaller diameters (11') adapted to bear successively on the tubular plate (3) so as to separate the tubes (2) completely filled with catalyst from the tubes which are not entirely filled.

8. A device according to claim 7, characterised in that it comprises a cylindrical wall (12) of variable and adjustable diameter.

9. A device according to either of claims 7 and 8, characterised in that the cylindrical wall of adjustable diameter has cylindrical sectors (12) which overlap laterally.

10. A device according to claim 9, characterised in that the cylindrical sectors (13) are retained externally by at least one adjustable outer belt (14).

11. A device according to any one of claims 7 to 10, characterised in that the systems used to reduce the charging space are of the type with curtains sliding on axes from the outside towards the centre of the reactor, with panels adjustable in position on the tubular plate, with inflatable elements or cone-shaped covers, with at least one adjustable diameter.

12. A device according to any one of claims 7 to 11, characterised in that the outer surface of the tubular plate (3) of the reactor is provided with a covering of a material adapted to absorb the shock of the catalyst particles, orifices of corresponding diameter being provided in this covering opposite the corresponding ends (4) of the reactor tubes.

13. A device according to any one of claims 7 to 12, characterised in that the base of the cylindrical wall or walls (11,11') is sheathed, preferably on its inner side, with a material adapted to absorb the shock of the catalyst particles.

14. A device according to either of claims 12 and 13, characterised in that the material adapted to absorb the shock of the particles on the tubular plate (3) and on the inner side of the cylindrical walls is of fabric, cardboard, elastomer sheet or carpet type.
